# EUROPEAN PATENT APPLICATION

(11) **EP 4 422 223 A1**
(43) Date of publication of application: **28.08.2024**
(21) Application number: 23158116.6
(22) Date of filing: 23.02.2023
(51) Int. Cl.: H04W 4/38, H04L 9/40

(54) **A METHOD FOR MONITORING A COMMUNICATION OF A FIELD DEVICE**

(71) Applicant: ABB SCHWEIZ AG, 5400 Baden (CH)
(72) Inventor: COPPIK, Nicolas, 64293 Darmstadt (DE); GAERTLER, Marco, 69221 Dossenheim (DE); SCHMIDT, Benedikt, 69117 Heidelberg (DE); MACZEY, Sylvia, 69493 Hirschberg (DE)
(74) Representative: Maiwald GmbH

(57) **Abstract**

A method for monitoring a communication of a field device of a plurality of field devices (112, 114, 116) is described, with
providing at least one stored characteristic property of a power consumption of each of the plurality of the field devices (112, 114, 116) induced by a respective query of a plurality of queries for a respective field device (112, 114, 116);
determining a respective query requested for each of the respective field devices of the plurality of field devices (112, 114, 116) during communication with the plurality of field devices (112, 114, 116);
measuring a characteristic property (200, 211,212, 213) of the power consumption for each of the respective field devices of the plurality of field devices (112, 114, 116) induced by a query during communication with the plurality of field devices (112, 114, 116);
determining a similarity of the stored characteristic property of the power consumption of each of the respective field devices induced by the respective query with the respective measured characteristic property (200, 211,212, 213) of the power consumption for the respective field device and for the respective query, for monitoring of the communication of the field device (112, 114, 116).

## Description

### Background

Industrial devices and systems are increasingly becoming a target for cyber-attacks. Cyber security of such systems is therefore of growing relevance. Security information and event management (SIEM) systems are of crucial importance for detecting threats to critical operational technology OT systems. Such systems aggregate security-relevant information from information technology IT systems and OT systems, but in the OT domain, their coverage is limited. More feature-rich and networked field devices are becoming available, e.g., the upcoming Ethernet APL Advanced Physical Layer devices using Open Platform Communications Unified Architecture OPC UA. While such devices are beginning to resemble IT resources such as servers, the options for integrating them with SIEM systems remain limited.

### Description

Legacy and heavily resource-constrained devices are common and hard to integrate into a SIEM system. Field devices are often resource constrained, internal monitoring suffers from lack of separation, and there is no standard for monitoring such devices. They frequently do not provide security monitoring or logging functionality and do not support the deployment of endpoint monitoring solutions or agents.

Monitoring communication patterns or network traffic would be an alternative. However, the detection capabilities of such approaches are limited as encrypted traffic becomes more common, e.g. OPC UA secure conversation.

Another alternative is to monitor field device health via side channels, such as power consumption. This allows monitoring outside the field device and can be used to detect changes in field device state, such as when a field device is infected with malware and starts executing different code than normal. However, monitoring this behavior relies on side channels only and cannot detect changes in a device's communication pattern and therefore does not have important contextual information necessary to distinguish an attack from a harmless difference in field device behavior, which may lead to false positives status messages or limited detection capabilities. While monitoring networks and side channels could be done separately and merging the results at a SIEM system, this does not fully address their shortcomings and requires field device-specific rules. To enable easy integration of field devices into a SIEM system, a solution is needed that overcomes these limitations and can monitor the communication and state of a wide range of field devices without manual configuration. Such a solution would further enhance the benefits of SIEM deployment in industrial environments and improve overall cybersecurity.

Rather than requiring upgrading or replacing all such devices, we propose adding external monitoring functionality based on both the communication behavior of the devices and their power consumption. To limit the amount of hardware required, our proposed solution operates on a combined power trace of all monitored devices and uses context information derived from observed device communication to associate deviations from a baseline power consumption to specific devices.

The solution could be deployed as an enhancement of the communication infrastructure, for example as part of an APL field switch, or as a separate monitoring unit placed between such a communication device, as a APL field switch, and its upstream connection.

Accordingly, the present invention is directed to a method for monitoring a communication of a field device of a plurality of field devices, a monitoring unit, a use of the monitoring unit for monitoring a safe communication of a field device, a computer program and a computer-readable storage medium.

Advantageous modifications of the invention are stated in the dependent claims. All combinations of at least two of the features disclosed in the description, the claims and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.
1. To achieve these and other advantages and in accordance with the purpose of the invention, as embodied and broadly described herein, there is provided a method for monitoring a communication of a field device of a plurality of field devices, wherein in one step of the method at least one stored characteristic property of a power consumption of each of the plurality of the field devices is provided, which is induced by a respective query of a plurality of queries for a respective field device. In a further step of the method a respective query requested for each of the respective field devices of the plurality of field devices during communication with the plurality of field devices is determined. In a further step of the method a characteristic property of the power consumption for each of the respective field devices of the plurality of field devices induced by a query during communication with the plurality of field devices is measured. In a further step of the method a similarity of the stored characteristic property of the power consumption of each of the respective field devices induced by the respective query with the respective measured characteristic property of the power consumption for the respective field device and for the respective query is determined, to monitor the communication of the field device.

A query can be an incoming request of a control system to a respective field device, wherein the respective field device can generate an outgoing response to the query. During the received query and the generated response the field device can increase its power consumption which can be described by the characteristic property of the power consumption of the respective field device induced by the respective query.

According to an aspect, queries and/or responses of the communication of each of the plurality of field devices and properties of power consumption of each of the plurality of field devices are electrically and/or signally accessed adjacent to each other. This can mean, that electrical signals of the communication and electrical signals of the power consumption of the plurality of field devices are determined and/or detected and/or sensed at a site signally upstream from the plurality of field devices with access as well to the communication of all of the field devices of the plurality of field devices as to a power source, which is configured to provide power to all of the individual field devices. This site can be a monitoring unit, which can be for example a part of a field switch and/or an APL field switch, which is configured to be connected to all the field devices of the plurality of field devices and wherein the field switch is configured to provide power to each of the field devices of the plurality of field devices.

According to an aspect, each of the field devices of the plurality of field devices can be configured to be electrically powered and to communicate by commonly using the same wires, as e.g., Ethernet-APL devices, particularly such that the plurality of field devices can be accessed adjacent to each other at the same point and/or a same unit, such as a remote I/O or an APL field switch.

At that point and/or that unit, a monitoring unit can be used for monitoring the communication of all connected respective field devices of the plurality of field devices as well as the individual and/or total power consumption of the respective field devices of the plurality of field devices coupled to such a point and/or unit.

The characteristic property of the power consumption of the field device can be a maximum of the power consumption of the respective field device during the communication and/or a duration of the power consumption of the respective field device during the communication and/or a signal form of the power consumption of the power consumption of the respective field device during the communication and/or a statistical parameter of the power consumption during the communication. The power consumption of the respective field device during the communication can be determined within a time window, which can be defined by a query to the respective field device and a response to the query from the field device, such that the power consumption of the respective field device within the time window is induced by a query. Such a query can be provided by a control unit, which is at least signally coupled to each of the field devices of the plurality of field devices. As an example the control unit can access an APL field switch with the query to a respective field device, which is at least signally coupled to that APL field switch.

Using other words, the method for monitoring the communication of the field device can be a hybrid security monitoring method for a plurality of industrial field devices using both field device communication and tracking of the power consumption of the respective monitored field devices to detect anomalous behavior of the respective field device. The monitoring of the field device communication can be a contextualization of the properties of the power consumption of the respective field device, corresponding to power consumption traces, for detecting deviations of the behavior of the respective field device.

The method for monitoring the communication of the field device can be an observing or monitoring of deviations of the measured characteristic property of the power consumption compared with the stored characteristic property, which is respectively associated with each field device's communication, including queries and/or responses. A normal behavior of the field devices, as described by the stored characteristic property of the power consumption of the respective field device, when performing certain actions, as determined based on the device's communication, can be based on the measured characteristic property of power consumption of the respective field device during normal operation.

The proposed method for monitoring a communication of a field device can be used for security monitoring of field devices without requiring device upgrades or reconfiguration. It can be deployed as part of the communication infrastructure, e.g., as an extension to an APL field switch or a remote I/O.

Advantageously, local analysis performed by the monitoring unit can limit the impact on IT network traffic, and an automatic configuration, which is described below, can minimize manual effort for set up of the method. The proposed method can enable an integration of field devices into a centralized security monitoring system as described below.

When a field device is communicating, the communication can be analyzed to determine the respective query and/or response of the communication and the respective communicating field device within a time window, which can be defined by a time between an incoming query and an outgoing response.

A change of the power consumption of a field device in an idle state in respect to a power consumption of a field device in an active state within the time window for communication can be associated with the characteristic property of the power consumption of the respective field device for a specific type of communication. The specific type of communication can mean a specific query and/or a specific response to the query.

The method for monitoring the communication of the field device tracks the communication of the plurality of field devices and the respective power consumption of the respective field device.

Advantageously, the method can enable the communication monitoring of a multitude of pluralities of field devices at the same time and can provide a monitoring coverage for an entire plant.

Advantageously, the method can provide a hybrid security monitoring for a multitude of pluralities of field devices by combining side channel, i.e. power consumption, and communication monitoring, i.e. queries and/or responses. That is, by means of the tracked communication the power consumption of the respective field devices is contextualized. Particularly, this method can be used for field devices using the same wires for communication of the respective field device and provision of power to the field device. By this, queries and/or responses of the communication of each of the plurality of field devices and the properties of power consumption of each of the plurality of field devices can be accessed at a point where the plurality of field devices are coupled first-time upstream to a control system. For instance, this point can be at an APL field switch.

Advantageously, the described method for monitoring communication of the field device can be executed locally, particularly at the point described above.

Advantageously, the described method can enable upgrading existing industrial installations to provide monitoring, particularly in respect to the already existing field devices, and integration of the monitoring of the field devices into a SIEM system without upgrading or re-configuring the field devices.

Further advantageously, a value of the determined similarity and/or a generated alert and/or a generated status message based on the described method, preferably by the monitoring unit described below, can be configured to communicate within an IP network and particularly for forwarding messages and/or alerts to a SIEM system.

Alternatively or additionally, the described method for monitoring communication of a field device can be integrated into a SIEM system like a separate sensor, for use of the method by a plurality of communication protocols.

Advantageously, the described method enables security monitoring of industrial field devices using communication behavior and power side channels.

The industrial field devices are monitored and integrated into a SIEM system without requiring changes to the filed devices themselves or manual configuration of the field devices. Multiple field devices can be monitored from a single monitoring unit based on their communications and particularly using a single and/or a combined power consumption trace, what is a superposition of the power consumption of the plurality of filed devices, which can be based on measurements using a single sensor for the superposed power consumption.

Further advantageously, the method, i.e. the determination of the similarity of the power consumption of the respective field device characterized by the respective communication, can be executed locally, at a point, where the power consumption data collection can be accessed, to minimize additional communication load on the network, particularly upstream to a field switch. This local execution can be provided by, e.g., a field switch and/or an APL field switch comprising the monitoring unit or coupled to a monitoring unit, wherein the monitoring unit is configured to perform the method as describe throughout this description.

According to an aspect, the power consumption of the plurality of field devices is determined jointly as a superposition of the power consumption of the plurality of field devices and the measuring of the characteristic property of the power consumption for the respective requested query for each of the respective field devices of the plurality of field devices is based on the superposed power consumption.

Advantageously, this reduces the hardware resources for determining the power consumption, as for instance only one current sensor can be used for that purpose.

According to an aspect, the at least one stored characteristic property of the power consumption of each of the plurality of the field devices induced by a respective query of the plurality of queries for a respective field device is provided by a storage unit. The stored characteristic properties can be provided by a field device manufacturer for easy setup.

According to an aspect, the at least one stored characteristic property of the power consumption of each of the plurality of the field devices induced by a respective query of the plurality of queries for a respective field device is determined based on a first amount of respective measured characteristic properties at a beginning of executing the method for monitoring the communication of the field device as described above and the respective at least one stored characteristic property of the power consumption is stored by the storage unit.

Advantageously, this determination of the stored characteristic properties of the power consumption of each of the plurality of field devices provides a flexible setup of the method, because the normal behavior of the field devices induced by a respective query as described by the stored characteristic property of the power consumption, will be learned by the method itself.

According to an aspect, the at least one stored characteristic property of the power consumption of each of the plurality of the field devices induced by a respective query of the plurality of queries for a respective field device is determined based on repeatedly storing, particularly in a first in, first out manner, a second amount of respective measured characteristic properties during execution of the method for monitoring the communication of the field device as described above and the respective at least one stored characteristic property of the power consumption is stored by the storage unit.

The repeatedly storing of the second amount of characteristic properties of the power consumption can be performed in such a way that prior stored data are overwritten by new data.

Using other words, establishing knowledge of a normal behavior of each of the plurality of field devices can be provided by monitoring the properties of the power consumption of the respective field device during communication induced by a query of the communication. Preferably, the monitored properties of the power consumption can be stored as an, preferably limited, history of power consumption traces induced by a respective query of a plurality of queries. Actual measured properties of the power consumption, particularly within a time window of communication, can be compared based on the history of stored properties of the power consumption of the respective field device, preferably within a time window of the respective communication, induced by the respective query to determine a similarity. If the determined value of the similarity is below a predefined threshold value a respective status value or an alert can be generated.

These properties of the power consumption can be stored as a difference to a respective baseline of the respective field device in an idle state. This difference of the power consumption in respect to a baseline can improve accuracy. Accordingly, the described method includes an automatic configuration in respect to the stored characteristic property of the power consumption of each of the plurality of field devices.

Advantageously this method for monitoring a communication of a field device, wherein the stored characteristic properties are determined by the described respective steps of the method above do not require a specific customization or manual configuration or modification for each field device or each kind of field device. Thereby the method is applicable to a variety of different field devices, without requiring customization. This enables to monitor a multitude of plurality of field devices at once and/or allows for a coverage for monitoring of the field devices with limited costs.

According to an aspect, the method includes the following steps. In one step, a baseline of the power consumption of each field device is determined if the respective field device is idle. In a further step, the similarity of the stored characteristic property of the power consumption of each of the respective field devices induced by the respective query with the respective measured characteristic property of the power consumption for the respective field device, based on characteristic properties for the power consumption is determined, where the baseline is subtracted from the measured characteristic property of power consumption and respectively the baseline subtracted from the at least one stored characteristic property of power consumption.

Using other words, if no communication is occurring, that is, if the respective field devices are in an idle state, the baseline for an individual power consumption and/or a combined, i.e. superposed, baseline power consumption can be obtained for the plurality of field devices. The respective baseline can be subtracted from a measured value of the power consumption of the respective field device in such a way that the similarity of stored characteristic property of the power consumption and measured characteristic property of the power consumption is compared based on deviations from the respective baseline.

Establishing the baseline of the idle state of the respective field device and ranges for normal behavioral of each respective field device in respect to the power consumption can be automated without manual configuration based on initially observing the field device when in idle state and during certain communication actions for establishing a history of the observed behavior. Changes in the connected devices or their configuration requires re-establishing a baseline and normal range.

According to an aspect, the characteristic property of the power consumption is a maximum of the power consumption of the respective field device induced by the respective query and/or a duration of the power consumption of the respective field device induced by the respective query and/or a signal form of the power consumption of the power consumption of the respective field device induced by the respective query and/or a statistical parameter of the power consumption of the respective field device induced by the respective query.

An associated time window of the respective communication can include the resulting timespan from receiving the query and responding to the query.

According to an aspect the queries or responses of the communication of each of the plurality of field devices and the characteristic properties of power consumption of each of the plurality of field devices is provided by a two wire cable.

According to an aspect the queries or responses of the communication of each of the plurality of field devices and properties of power consumption of each of the plurality of field devices conforms to an Ethernet-APL standard.

According to an aspect a security alert is generated if a value of the determined similarity of the stored characteristic property of the power consumption compared to the respective measured characteristic property of the power consumption for the respective field device induced by the respective query is below a predefined threshold value and preferably the security alert is reported to a SIEM system.

Using other words, anomalies indicate by a difference in device behavior in respect to the power consumption can be reported to a security system, such as a SIEM system by generating a security alert and/or a status message. The security alert and/or the status message can be forwarded to a signally coupled SIEM system if such outliers of the power consumption of the respective field device occurs.

Events in which a deviation of the respective power consumption of the respective field device falls outside of this normal range, i.e. the stored characteristic property of the power consumption, can indicate changes in the field device behavior and can be reported to a SIEM system by using the same upstream communication link used for field device communication. The monitoring unit can observe and/or monitor communication of all connected field devices and can trace their individual and/or combined power consumption.

According to an aspect a monitoring unit is proposed, comprising
a storage unit and at least one measuring unit and a communication monitoring unit and the processing unit, wherein the storage unit is configured for storing stored characteristic properties of a power consumption of each of the plurality of the field devices induced by a respective query of a plurality of queries for a respective field device. The at least one measuring unit is configured to be electrically coupled to the plurality of field devices for measuring the respective characteristic property of the power consumption. The communication monitoring unit is configured to monitor and identify queries and/or responses with each of the plurality of field devices. And the monitoring unit is configured to perform any one of the methods as described above.

The monitoring unit can be supported by the processing unit to perform any one of the previous described methods for monitoring of field devices.

The described method for monitoring field devices can enhance a functionality of a communication device used in an industrial system, such as an APL field switch, with security monitoring capabilities for the plurality of the field devices, based on the communication behavior of those plurality of field devices and their individual and/or combined power consumption. The method can be implemented as a separate hardware module, as for instance the monitoring unit or as a feature of such a communication device.

According to an aspect the communication monitoring unit is configured to be coupled to each of the field devices of the plurality of field devices. Additionally, the communication monitoring unit is configured to be coupled to a control unit, the control unit generating requests for the field devices. Additionally, the communication monitoring unit is configured for determining a respective query and/or response requested for each of the respective field devices of the plurality of field devices during communication of the control unit with the respective field device of the plurality of field devices.

A use of the monitoring unit as described above is proposed for monitoring a safe communication of a field device of a plurality of field devices according to any one of the methods for monitoring communication of a field device as described above.

A computer program is proposed, comprising instructions, which, when the program is executed by a computer, cause the computer to carry out any one of the methods for monitoring communication of the field device as described above.

A computer-readable storage medium for storing the computer program as described above is proposed.

### Brief description of the drawings

The accompanying drawings, which are included to provide a further understanding of the invention and are incorporated in and constitute a part of this application, illustrate embodiments of the invention and together with the description serve to explain the principle of the invention. The drawing displays:
- Figure 1: a plant communication system comprising field devices;
- Figure 2: a schematic plot of power consumption of field devices;
- Figure 3: a schematic plot of a superposed power consumption of the plurality of field devices; and
- Figure 4: a schematic plot of characteristic properties of power consumption of field devices.

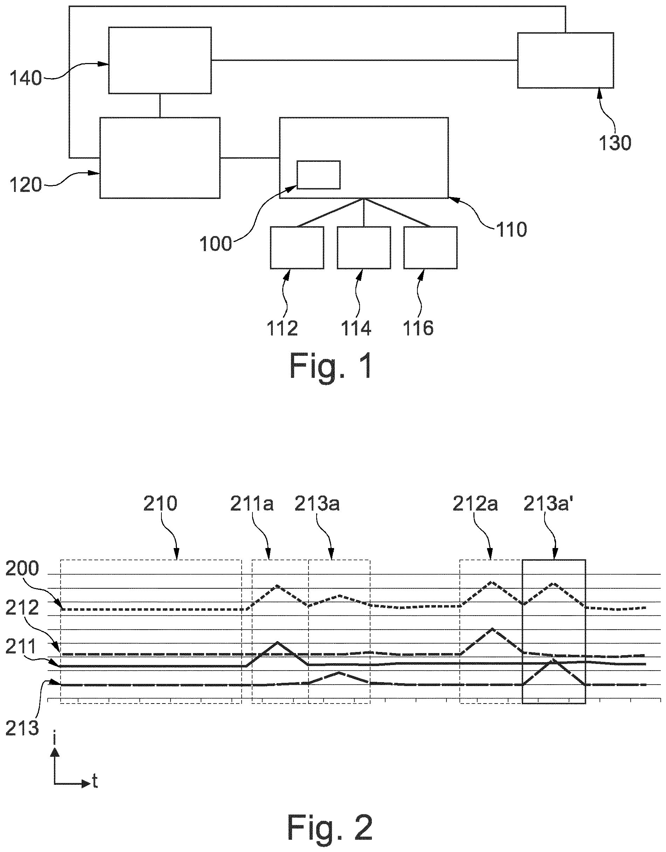

Figure 1 schematically sketches a plant communication system, wherein a plurality of field devices 112, 114, 116 are coupled to APL field switch 110 and wherein the APL field switch is coupled to an APL power switch 120. The APL power switch 120 is coupled to a control system 140 and to a SIEM system 130 and the SIEM system 130 is coupled to the control system 140.

The APL field switch comprises a monitoring unit 100, comprising a storage unit for storing stored characteristic properties of a power consumption of each of the plurality of the field devices 112, 114, 116 induced by a respective query of a plurality of queries for a respective field device 112, 114, 116. The respective query can be generated by the control system 140. Further on, the monitoring unit 100 comprises at least one measuring unit configured to be electrically coupled to the plurality of field devices 112, 114, 116 for measuring the respective characteristic property of the power consumption of the respective field device of the plurality of field devices 112, 114, 116. The monitoring unit 100 comprises a communication monitoring unit configured to monitor and identify queries and/or responses with each of the plurality of field devices 112, 114, 116 and a processing unit. The monitoring unit 100 is configured to perform any one of the methods described above.

Figure 2 schematically sketches plots 211, 212, 213 of power consumption of the plurality of field devices 112, 114, 116. The vertical component current i of figure 2 indicates the power consumption of the respective field device 112, 114, 116 and the horizontal component time t indicates a duration of the power consumption. The plot 200 sketches a superposition of the plots 211, 212, 213 of power consumption of the plurality of field devices 112, 114, 116. Within the time window 210 a baseline of the respective field device 112, 114, 116 and a baseline of the superposition of the field devices 112, 114, 116 is drawn. The time windows 211a and 213 a as well as 212a indicate a regular normal behaviour of the power consumption of the respective field devices induced by a specific married to the respective field device and the corresponding power consumption signal for the superposed power consumption of the plurality of field devices 112, 114, 116. By comparing the time window 213a' and the time window 213a, which indicates a characteristic property of a field device by the characteristic pattern of the plot 213 within the mentioned time windows, the measured characteristic property of the field device with the power consumption plot 213 indicates a deviation between the two time windows 213a and 213a'. If the stored characteristic property of the power consumption 213 of the field device is similar to the characteristic property shown in time window 213a the behaviour of the power consumption within the time window 213a' indicates a faulty behaviour of the respective field device. If the similarity is below a predefined threshold value a security alert and/or status message can be reported to SIEM system. As can be seen by comparing the characteristic property of the field device with the plot 213 the deviation within the superposed signal of the plot 200 indicates the same deviation. The monitoring unit, which is configured to perform the method for monitoring communication of a field device of a plurality of field devices, can be deployed as an extension of the communication device, as for instance an APL field switch, and can observe the communication behaviour of the monitored plurality of field devices and access their combined or superposed power consumption. The communication behaviour is used to determine periods of communication activity for each field device, which are then used to analyse the combined and/or individual power trace to determine properties of power consumption of each of the plurality of field devices.

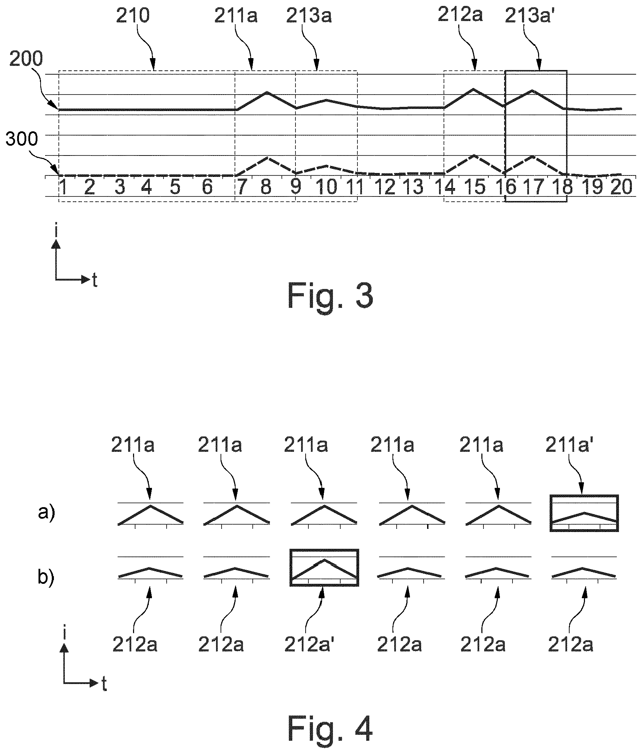

Figure 3 schematically sketches a plot 200 of a combined or superposed power consumption of the plurality of field devices 112, 114, 116 and a plot 300 of the combined or superposed power consumption of the plurality of field devices 112, 114, 116 where the baseline of the plurality of field devices 112, 114, 116 is subtracted, wherein this baseline is resulting from an idle state of the plurality of field devices 112, 114, 116. It is shown that the characteristic property of the power consumption of each of the plurality of field devices induced by respective query of a plurality of queries for a respective field device can be identified even if the baseline is subtracted. Advantageously, by subtracting the baseline the sensing for the superposed power consumption of the plurality of field devices 112, 114, 116 can be measured with more accuracy.
The monitoring unit can measure the combined, or superposed, characteristic properties of the power consumption of the plurality of field devices. Within each communication window, when a field device responds to a request, the deviation of the power consumption from the baseline power consumption can be associated with a property of the power consumption of the respective field device and respective query type or request type.

Figure 4a schematically sketches a plurality of plots 211a of a characteristic property of a power consumption of a first field device of the plurality of field devices 112, 114, 116 induced by a respective query, wherein one plot 211a' of the characteristic property of the power consumption of the first field device induced by the respective query deviates from the others, which can indicate that the first field device can be compromised.

Figure 4b schematically sketches a plurality of plots 212a of a characteristic property of a power consumption of a second field device of the plurality of field devices 112, 114, 116 induced by a respective query, wherein one plot 212a' of the characteristic property of the power consumption of the second field device induced by the respective query deviates from the others, which can indicate that the second field device can be compromised. The characteristic properties of the power consumption of the first and the second field device which similar to each other within a specific range can be used to define the stored characteristic property of the power consumption of the respective field device induced by the respective query.

Using other words, the higher 212a' or lower 211a' deviation from a superposed baseline power consumption can constitute anomalous behavior, which can cause the monitoring unit to generate an event.

Since minor variations in the characteristic property of the power consumption of the respective field device can be expected, the monitoring unit can establish a range of normal behavior for each field device of the plurality of field devices. For this, the monitoring unit can keep a history of previously measured characteristic properties of power consumption for each field device of the plurality of field devices and the respective query or request type, as difference from the baseline of the power consumption of the plurality of field devices. Storing these per-device histories as deviations from the baseline can result in the benefit that the monitoring unit can keep using them as stored characteristic property if the baseline power consumption changes, for instance if a field device is added or removed.

## Claims

1. A method for monitoring a communication of a field device of a plurality of field devices (112, 114, 116), comprising:
providing at least one stored characteristic property of a power consumption of each of the plurality of the field devices (112, 114, 116) induced by a respective query of a plurality of queries for a respective field device (112, 114, 116);
determining a respective query requested for each of the respective field devices of the plurality of field devices (112, 114, 116) during communication with the plurality of field devices (112, 114, 116);
measuring a characteristic property (200, 211,212, 213) of the power consumption for each of the respective field devices of the plurality of field devices (112, 114, 116) induced by a query during communication with the plurality of field devices (112, 114, 116); and
determining a similarity of the stored characteristic property of the power consumption of each of the respective field devices induced by the respective query with the respective measured characteristic property (200, 211,212, 213) of the power consumption for the respective field device and for the respective query, for monitoring of the communication of the field device (112, 114, 116).

2. The method according to claim 1, wherein the power consumption of the plurality of field devices (112, 114, 116) is determined jointly as a superposition of the power consumption (200, 300) of the plurality of field devices (112, 114, 116); and
measuring of the characteristic property of the power consumption for the respective requested query for each of the respective field devices of the plurality of field devices (112, 114, 116) is based on the superposed power consumption (200, 300).

3. The method according to claim 1 or 2, wherein the at least one stored characteristic property of the power consumption of each of the plurality of the field devices (112, 114, 116) induced by a respective query of the plurality of queries for a respective field device (112, 114, 116) is provided by a storage unit.

4. The method according to claim 3, wherein the at least one stored characteristic property of the power consumption of each of the plurality of the field devices (112, 114, 116) induced by a respective query of the plurality of queries for a respective field device is determined based on a first amount of respective measured characteristic properties (200, 211,212, 213) at a beginning of executing the method for monitoring the communication of the field device (112, 114, 116) according to claim 1 and the respective at least one stored characteristic property of the power consumption is stored by the storage unit.

5. The method according to claim 3 or 4, wherein the at least one stored characteristic property of the power consumption of each of the plurality of the field devices (112, 114, 116) induced by a respective query of the plurality of queries for a respective field device is determined based on repeatedly storing, particularly in a first in, first out manner, a second amount of respective measured characteristic properties (200, 211,212, 213) during execution of the method for monitoring the communication of the field device according to claim 1 and the respective at least one stored characteristic property of the power consumption is stored by the storage unit.

6. The method according to one of the preceding claims, including
determining a baseline (210) of the power consumption of each field device (112, 114, 116) if the respective field device (112, 114, 116) is idle; and
determining the similarity of the stored characteristic property of the power consumption of each of the respective field devices induced by the respective query with the respective measured characteristic property of the power consumption (200, 211,212, 213) for the respective field device, based on characteristic properties for the power consumption, where the baseline (210) is subtracted from the measured characteristic property of power consumption (200, 211,212, 213) and respectively the baseline (210) subtracted from the at least one stored characteristic property of power consumption.

7. The method according to one of the preceding claims, wherein the characteristic property of the power consumption (200, 211,212, 213) is a maximum of the power consumption of the respective field device (112, 114, 116) induced by the respective query and/or a duration of the power consumption of the respective field device (112, 114, 116) induced by the respective query and/or a signal form of the power consumption of the power consumption of the respective field device (112, 114, 116) induced by the respective query and/or a statistical parameter of the power consumption of the respective field device (112, 114, 116) induced by the respective query.

8. The method according to one of the preceding claims, wherein the queries or responses of the communication of each of the plurality of field devices (112, 114, 116) and the characteristic properties of power consumption of each of the plurality of field devices (112, 114, 116) is provided by a two wire cable.

9. The method according to one of the preceding claims, wherein the queries or responses of the communication of each of the plurality of field devices (112, 114, 116) and the characteristic properties of power consumption of each of the plurality of field devices (112, 114, 116) conforms to an Ethernet-APL standard.

10. The method according to one of the preceding claims, wherein a security alert is generated if a value of the determined similarity of the stored characteristic property of the power consumption compared to the respective measured characteristic property of the power consumption for the respective field device induced by the respective query is below a predefined threshold value; and preferably the security alert is reported to a SIEM system (130).

11. A monitoring unit (100), comprising:
a storage unit configured for storing stored characteristic properties of a power consumption of each of the plurality of the field devices (112, 114, 116) induced by a respective query of a plurality of queries for a respective field device (112, 114, 116);
at least one measuring unit configured to be electrically coupled to the plurality of field devices (112, 114, 116) for measuring the respective characteristic property of the power consumption;
a communication monitoring unit configured to monitor and identify queries and/or responses with each of the plurality of field devices (112, 114, 116); and
a processing unit; and
wherein the monitoring unit (100) is configured to perform any one of the methods according to claim 1 to 10.

12. The monitoring unit (100) according to claim 11, wherein the communication monitoring unit (100) is configured:
to be coupled to each of the field devices of the plurality of field devices (112, 114, 116);
to be coupled to a control unit (140), the control unit (140) generating requests for the plurality of field devices (112, 114, 116); and
for determining a respective query and/or response requested for each of the respective field devices of the plurality of field devices (112, 114, 116) during communication of the control unit (140) with the respective field device of the plurality of field devices (112, 114, 116).

13. Use of the monitoring unit (100) according to claim 11 or 12 for monitoring a safe communication of a field device of a plurality of field devices (112, 114, 116) according to any one of claims 1 to 10.

14. A computer program, comprising instructions, which, when the program is executed by a computer, cause the computer to carry out a method according to any one of claims 1 to 10.

15. A computer-readable storage medium for storing the computer program according to claim 14.
